# EUROPEAN PATENT SPECIFICATION

(11) **EP 2 245 858 B1**
(45) Date of publication and mention of the grant of the patent: **11.04.2018**
(21) Application number: 09710577.9
(22) Date of filing: 13.02.2009
(51) Int. Cl.: H04Q 9/00, H04L 12/28, G05D 1/02

(54) **DISTRIBUTED MULTI-ROBOT SYSTEM**
VERTEILTES MEHRFACHROBOTERSYSTEM
SYSTÈME À PLUSIEURS ROBOTS RÉPARTIS

(30) Priority: 13.02.2008 US 28320 P; 28.01.2009 US 361379
(43) Date of publication of application: 03.11.2010
(73) Proprietor: Seegrid Corporation, Pittsburgh, PA 15275 (US)
(72) Inventor: FRIEDMAN, Scott Justin-Marl, Pittsburgh Pennsylvania 15241 (US); MORAVEC, Hans Peter, Pittsburgh Pennsylvania 15208 (US)
(74) Representative: Müller-Boré & Partner Patentanwälte PartG mbB
(86) International application number: PCT/US2009/034081
(87) International publication number: WO 2009/102970

(56) References cited:
- WO-A1-01/38945
- WO-A2-2007/065031
- KR-A- 20020 088 880
- KR-B1- 100 645 818
- US-A1- 2003 212 472
- US-A1- 2005 287 038
- US-A1- 2005 287 038
- US-A1- 2006 178 777
- US-A1- 2006 178 777

## Description

### FIELD OF INTEREST

The present inventive concepts relate to designs, architectures, functions, and methods for robot systems having more than one robot, and in particular to systems and methods where communication with and among the robots is possible.

### BACKGROUND

Traditionally, the architecture for consumer service robots has consisted of a machine that includes all the physical actuators needed for the service tasks, as well as all the perception and computation systems needed to perform the service task. This has resulted in service robots with severe cost and functionality restrictions. Moreover, it has resulted in severe design restrictions, with each robot needing to serve the same function competently within a wide array of facility environments.

In that regard, the robots tended to be singular in purpose and autonomous - in that they do not tend to interact in any service-oriented manner. A service robot could be introduced into a home, for example, and would service the home according to the robot's on-board preset algorithms. To the extent the robot had any real-time adaptability capability, it tended to be limited to object detection and avoidance.

US 2003/0212472 A1 discloses an autonomous multi-platform robot system for performing at least one functional task in an environment. The system includes at least one navigator platform providing mapping, localization, planning and control functions for itself and at least one other platform within the environment and at least one functional robot platform in communication with one or more navigator platforms for performing one or more functional tasks.

### SUMMARY OF INVENTION

In accordance with aspects of the present invention, provided is a robot system architecture, design, and method that enable the creation and use of service robots that are much simpler than those typically used. To achieve this, many on-board robot functions can be provided as a shared, central resource for any number of robots performing functions either serially or simultaneously in a facility.

A system can be provided that includes at least one manager and plural robots configured to communicate wirelessly. The manager can include certain functions that generate data, instructions, or both used by one or more robots. The manager can also facilitate communications among several robots, or robots could also be configured to communicate directly.

In accordance with one aspect of the invention, provided is a distributed multi-robot system. The system includes: a robot manager having a wireless communication module that transmits and receives robot information; and a plurality of robots, each having a wireless communication module configured to communicate with the robot manager in conjunction with performance of a robot service function.

The robot manager can include a mapping and navigation module configured to generate and update a map of an environment within which the plurality of robots operate.

The mapping and navigation module can be configured to track movement of the plurality of robots within the environment.

The mapping and navigation module can be configured to provide information and data to at least one robot that is used by the robot to navigate within the environment.

The robot manager can be configured to use information provided by at least one of the plurality of robots to generate and update the map of the environment.

The robot manager can be configured to use information provided by a wireless transceiver to generate and update the map of the environment.

The map of the environment can include a map of at least one of an office building; a warehouse; a shopping mall, a residential complex, and a house.

The robot manager and the plurality of robots can each include a Bluetooth communication subsystem.

The robot manager can further include an Internet communication subsystem configured to enable the robot manager to communicate with remote systems.

The robot manager can further include an application framework configured to download software from a remote system and to update the robot manager using the downloaded software.

The robot manager can further include an application framework configured to download software from a remote system and to provide enhanced or different functions to one or more of the plurality of robots using the downloaded software.

Multiple robots can be configured to share the same information stored at the robot manager.

Multiple robots can be configured to update similar information stored at the robot manager.

The robot manager can further comprise a scheduler configured to schedule operations of at least one robot from the plurality of robots.

At least two robots from the plurality of robots can be configured to communicate with each other.

The at least two robots can be configured to communicate with each other through the robot manager.

The plurality of robots can include at least one of a cleaning robot, a security robot, and an entertainment robot.

In accordance with another aspect of the invention, provided is a distributed multi-robot system. The system includes: a robot manager having a wireless communication module that transmits and receives robot information; and a plurality of robots, each having a wireless communication module configured to communicate with the robot manager in conjunction with performance of a robot service function. The robot manager includes: a mapping and navigation module configured to generate and update a map of an environment within which the plurality of robots operate; an Internet communication subsystem configured to receive information and data used to monitor and control the plurality of robots; and an application framework configured to download software from a remote system and to update the robot manager using the downloaded software and to download to provide enhanced or different functions to one or more of the plurality of robots using the downloaded software.

In accordance with another aspect of the invention, provided is a method of controlling a plurality of robots in an environment. The method can comprise: providing a robot manager having a wireless communication module that transmits and receives robot information; and the robot manager communicating with each of a plurality of robots within the environment in conjunction with performance of a robot service function.

The method can further include generating and updating a map of the environment within which the plurality of robots operate.

The method can further include navigating at least one of the plurality of robots through the environment using the map.

The method can further include scheduling operations of at least one robot from the plurality of robots using the robot manager.

The method can further include downloading software from a remote system via the Internet and updating the robot manager using the downloaded software.

The method can further include downloading software from a remote system via the Internet and providing enhanced or different functions to one or more of the plurality of robots using the downloaded software.

The method can further include multiple robots sharing the same information stored at the robot manager.

The method can further include multiple robots updating similar information stored at the robot manager.

The method can further include at least two robots from the plurality of robots communicating with each other.

The at least two robots can communicate with each other through the robot manager.

### BRIEF DESCRIPTION OF THE DRAWINGS

The present invention will become more apparent in view of the attached drawings and accompanying detailed description. The embodiments depicted therein are provided by way of example, not by way of limitation, wherein like reference numerals refer to the same or similar elements. The drawings are not necessarily to scale, emphasis instead being placed upon illustrating aspects of the invention. In the drawings:
FIG. 1 is an embodiment of a system architecture having functionality distributed across a robot and a robot manager.
FIG. 2 shows an embodiment of a system design, whereby the robot manager can support the functionality of several different kinds of service robots.
FIG. 3 shows an example of a floor plan of a home using an embodiment of a distributed multi-robot system in accordance with aspects of the present invention.
FIG. 4 is an embodiment of a transceiver that could be used to communicate location and/or obstruction information to a distributed multi-robot system in accordance with aspects of the present invention.
FIG. 5 shows an embodiment of a remotely accessible distributed multi-robot system in accordance with aspects of the present invention.

### DETAILED DESCRIPTION OF PREFERRED EMBODIMENT

Hereinafter, aspects of the present invention will be described by explaining illustrative embodiments in accordance therewith, with reference to the attached drawings. While describing these embodiments, detailed descriptions of well-known items, functions, or configurations are typically omitted for conciseness.

It will be understood that, although the terms first, second, etc. are be used herein to describe various elements, these elements should not be limited by these terms. These terms are used to distinguish one element from another, but not to imply a required sequence of elements. For example, a first element can be termed a second element, and, similarly, a second element can be termed a first element, without departing from the scope of the present invention. As used herein, the term "and/or" includes any and all combinations of one or more of the associated listed items.

It will be understood that when an element is referred to as being "on" or "connected" or "coupled" to another element, it can be directly on or connected or coupled to the other element or intervening elements can be present. In contrast, when an element is referred to as being "directly on" or "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements, and/or components, but do not preclude the presence or addition of one or more other features, steps, operations, elements, components, and/or groups thereof.

Spatially relative terms, such as "beneath," "below," "lower," "above," "upper" and the like may be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as "below" and/or "beneath" other elements or features would then be oriented "above" the other elements or features. The device may be otherwise oriented (e.g., rotated 90 degrees or at other orientations) and the spatially relative descriptors used herein interpreted accordingly.

In the preferred embodiment the system can include one or more robots, and one or more robot managers, e.g., servers. The number of servers will be much fewer than the number of robots in the preferred embodiment.

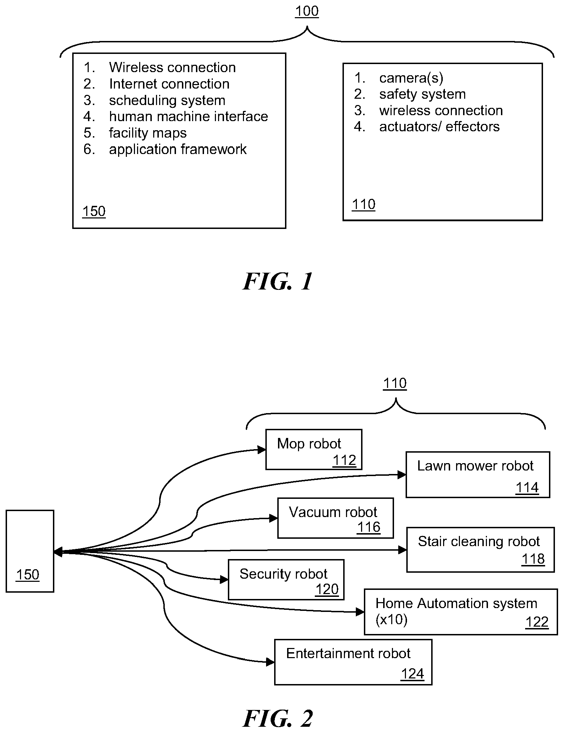

FIG. 1 is an embodiment of a system architecture 100 wherein functionality is distributed across one or more robots 110 and at least one remote robot manager 150. As per FIG. 1, the robot manager 150 can be configured to provide different classes of functions for the robots 110. As examples, such classes of functions can include, but are not limited to:
1. A wireless connection to connect to the robots as well as other wireless enabled devices and Internet gateways in the facility;
2. Internet connection capability, which can be a wired or wireless connection;
3. A scheduling system to schedule robot activity, e.g., to coordinate the activity of multiple robots, and/or to coordinate the scheduling of the robots with the human occupants of the facility;
4. A human machine interface that provides a high functionality and high performance interface where the occupants can interact, program, schedule and otherwise interface to the service robots;
5. Mapping and navigation functions;
6. A monitoring module that monitors the robots activity and/or performance; and
7. An application framework, whereby additional software or other content (e.g., information and data) can be downloaded from a remote manager to update the system, or to provide enhanced or different functions.

Further the service robots 110 can include one or more functional devices, mechanisms, systems, or subsystems. These will tend to depend on the types of services or functions that robot is configured to perform. In some embodiment, these can include one or more of:
a. Cameras, either monocular or stereo;
b. Safety systems, including detectors of various types;
c. Wireless connection to the robot manager and /or to each other; and
d. Actuators and effectors.

As will be appreciated by those skilled in the art, the actual functional devices, mechanisms, systems, and subsystems included in or with a robot will depend on the functional expectations for the robot.

FIG. 2 shows an embodiment of a system design, whereby the robot manager 150 can support the functionality of several different kinds of service robots 110. Here the services include a mop robot 112, a lawn mower robot 114, a vacuuming robot 116, a stair cleaning robot 118, a security robot 120, a home automation robot 122, and/ or an entertainment robot 124.

The communication between the robot manager 150 and one or more robots 110 can be via any one or more known, or hereafter developed, wireless networks, and can also include one or more wired networks. For example, such networks can include a Bluetooth network, satellite network, cell phone network, wireless modem or home network, and the like. The manager can be, for example, local to one or more of the robots or remote. As an example, robots can communicate with one or more robot managers over the Internet via a wireless modem attached to a manager or personal computer within a user's home or within a commercial facility.

Each manager and robot can include at least one processor and at least one data storage device configured to store information and computer instructions.

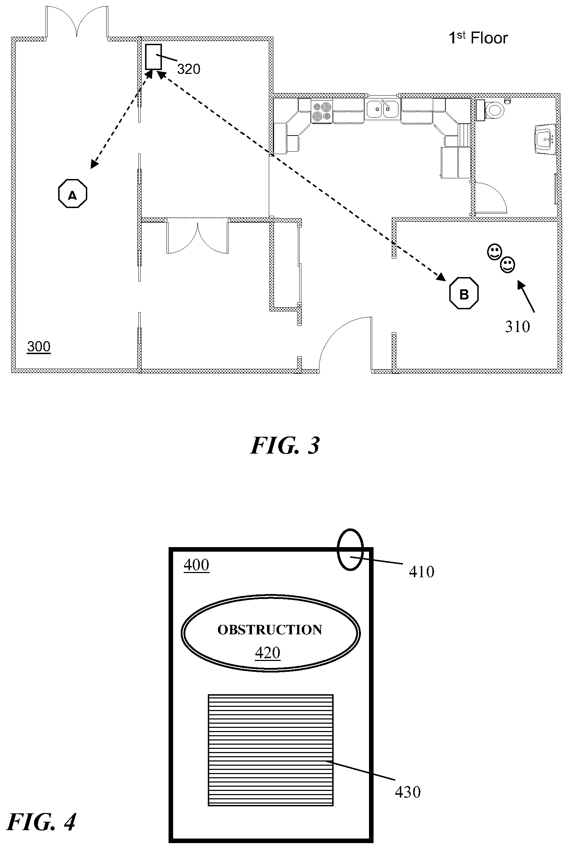

FIG. 3 shows an embodiment of a distributed multi-robot system used in a facility, in accordance with aspects of the present invention. Here that facility is a home, represented by floor plan 300. Two different robots, robots A and B, and one robot manager 320, such as a server or properly equipped personal computer, is shown in FIG. 3 and discussed below.

Robot A is a floor cleaning robot designed to navigate throughout home 300 while vacuuming floors and avoiding obstacles. Robot B is child care robot, designed to monitor the location and activities of children 310, and to provide entertainment options. The manager 320 is in communications with both robots A, B and with the Internet, in this embodiment.

Traditionally home cleaning robots navigate by following curved paths until encountering an obstacle, and then changing direction. By randomly walking the environment, they eventually clean the whole area. This is because of the power and size limitations which make it prohibitive to include complex mapping functionality on the robot.

Traditional home entertainment robots are little more than computers on wheels that can be programmed to perform simple motions while playing pre-recorded behaviors. Again this is because of the limitations of including rich functionality in low cost mobile platform.

Minimizing energy consumption is a key design objective when developing mobile platforms. Removing the need for intense computational power from a mobile platform allows for longer battery life, lower cost and lighter weight.

The robot manager 320 is a stationary device "plugged into" the wall, in this embodiment. This would allow manager 320 to be manufactured using traditional computer hardware designs, which allow for low cost and high performance. However, the computer itself would have to be configured and/or programmed to provide the unique functionality disclosed herein. Any functionality that does not control the most primitive functionality of the mobile robot could be assigned to the robot manager 320. Therefore, the robots can be configured to be extremely sophisticated in their functionality, without requiring the robot itself to have a wealth of sophisticated programming resident or on-board. This allows for lower cost robots, configurable through the manager 320.

Robot A, the floor cleaning robot, could navigate through the environment using its normal simplistic strategy the first time it operates in the environment. It would periodically update the manager with its position (determined in a variety of ways, e.g., dead-reckoning or other localization techniques) and the presence or absence of obstructions. The manager 320 could consolidate this information into a map of the environment. The next time the cleaning robot A is operated, it could now be commanded by the home manager 320 to follow a more efficient, planned route, determined by the manager 320. This provides a more efficient cleaning function, without making the robot more complex.

Furthermore, the map developed on the manager 320 could also be used to guide the operation of the child-care robot B. The robots would both be able to update the manager 320 of the whereabouts of obstacles and/or children 310, which would immediately allow the maps to be updated and allow more effective use of the cleaning robot A. If the children wanted to play an interactive game with the robot B, robot B could have access to all of the information available on the Internet, and to speech recognition and synthesis capabilities running on the manager 320, again, without increasing the power consumption of the robot B.

As is shown in FIG. 4, in another embodiment, a user-worn transceiver or transponder 400 could be used to create a map of the environment, e.g., in the form of a bracelet or belt-clip device - as examples. The transceiver 400 could also be used to provide instructions to the robot manager, or to at least one robot via the robot manager. The transceiver 400 is equipped with a wireless communication device 410 configured to communicate with manager 320, in this embodiment. As one or more users walks through the home 300, the transceiver 400 could provide location information to the robot manager 320, which could then create and/or update a map of the home. Optionally, the transceiver could have a button 420 on it, depression of which could cause a signal to be sent to the manager 320 indicating the presence of an obstruction, e.g., table.

The transceiver 400 could also optionally include a microphone 430 to receive information from the user. For example, the user could push the obstruction button 420 when he reaches a table and say "permanent" to indicate to the manager that the obstruction is intended to persist in that location. As another example, the user could push the obstruction button 420 and say "table" to indicate to the manager 320 that the obstruction is a table. The manager 320 can process the input and indicate in its map that the obstruction is "permanent" or a "table." As will be appreciated by those skilled in the art, the transceiver of FIG. 4 is not limited to the particular embodiment shown. In other embodiments, the obstruction button could just be a communication enabling button, that enables the user to communicate verbally with the robot manager. Various other forms of non-verbal communication could also be supported.

In yet another embodiment, a user can control and monitor its robots A, B from remote locations via manager 320. In such an embodiment, the user could access such robot information from a Web site that communicates with manager 320, which in turn communicates with robots A, B.

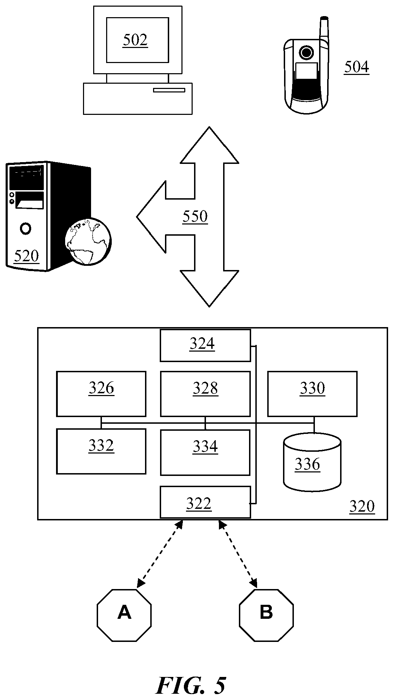

FIG. 5 shows an embodiment of a remotely accessed distributed multi-robot system in accordance with aspects of the present invention. In this embodiment, a user operating a personal computer (or the like) 502 or a mobile device 504 (e.g., cell phone or personal digital assistant) can access a Web based system 520, via the World Wide Web 550 (or Internet), to monitor and/or control robots A, B through robot manager 320.

Here, robot manager 320 is shown including the following functional modules: a wireless communication module 322 used to connect to the robots as well as other wireless enabled devices and Internet gateways in the facility; an Internet connection module 324, which can be a wired or wireless connection; a scheduling system 326 used to schedule robot activity, e.g., to coordinate the activity of multiple robots, and/or to coordinate the scheduling of the robots with the human occupants of the facility; a human machine interface 328 that provides a high functionality and high performance interface where the occupants can interact, program, schedule and otherwise interface to the service robots; a mapping and navigation module 330; a monitoring module 334 that monitors the robots activity and/or performance; and an application framework 334, whereby additional software can be downloaded from a remote manager to update the system, or to provide enhanced or different functions. Manager 320 also includes at least one storage device 336 configured to store maps, as well as other program code and data useful or needed to support other functions of the manager 320 and/or robots A, B.

In this embodiment, a remote user could wake-up cleaning robot A and have it vacuum the house, e.g., before the user got home. The user could also watch the robot navigate through the house via the rendering of a computer screen that includes a representation similar to that shown in FIG. 3. The present invention is not limited in this sense, this example is provided merely for illustration.

Since the robot manager 320 is in communication with robots A, B computationally intensive functions can be done primarily by server 320 rather than at the robots A, B. The manager 320 can then communicate the results of the computationally intensive functions, or instructions based thereon, to the appropriate robot A, B. This allows for highly capable, yet relatively simple and low cost robots.

While the foregoing has described what are considered to be the best mode and/or other preferred embodiments, it is understood that various modifications can be made therein and that the invention or inventions may be implemented in various forms and embodiments, and that they may be applied in numerous applications, only some of which have been described herein.

## Claims

1. A distributed multi-robot system, comprising:
a robot manager (320) having a wireless communication module (322) that transmits and receives robot information; the robot manager (320) comprising:
a mapping and navigation module (330) configured to generate and update a map of an environment;
an Internet communication subsystem configured to receive information and data used to monitor and control a plurality of robots; and
an application framework (334) configured to download software from a remote system and to update the robot manager (320) using the downloaded software; and
a plurality of robots (A, B) within the environment, each having a wireless communication module configured to communicate with the robot manager (320) in conjunction with performance of a robot service function;
wherein the robot manager (320) is adapted to perform computationally intensive functions on behalf of a robot (A, B) for use in performance of a robot service function and communicate the results of the computationally intensive functions or instructions based thereon to a robot (A, B); and
wherein the robot manager (320) is adapted to use information provided by a wireless transceiver (400) carried by a user to generate and update a map of the environment, and
wherein the robot manager (320) is adapted to automatically update an electronic map of the environment from location and object information received from one or more of the plurality of robots during performance of one or more service function.

2. The system of claim 1, wherein the mapping and navigation module (330) tracks movement of the plurality of robots (A, B) within the environment, or
wherein the mapping and navigation module (330) provides information and data to at least one robot (A, B) that is used by the robot (A, B) to navigate within the environment.

3. The system of claim 1, wherein the robot manager (320) uses information provided by at least one of the plurality of robots (A, B) to generate and update the map of the environment.

4. The system of claim 1, wherein the map of the environment includes a map of at least one of an office building, a warehouse, a shopping mall, a residential complex, and a house.

5. The system of claim 1, wherein the robot manager (320) and the plurality of robots (A, B) each include a Bluetooth communication subsystem, or
wherein the Internet communication subsystem is configured to enable the robot manager (320) to communicate with remote systems.

6. The system of claim 1, wherein the application framework (334) is also configured to provide enhanced or different functions to one or more of the plurality of robots (A, B) using the downloaded software.

7. The system of claim 1, wherein multiple robots (A, B) are configured to share the same information stored at the robot manager (320), or
wherein multiple robots (A, B) are configured to update similar information stored at the robot manager (320).

8. The system of claim 1, wherein the robot manager (320) further comprises a scheduler configured to schedule operations of at least one robot from the plurality of robots (A, B).

9. The system of claim 1, wherein at least two robots from the plurality of robots (A, B) are configured to communicate with each other, or
the at least two robots are configured to communicate with each other through the robot manager (320).

10. The system of claim 1, wherein the plurality of robots (A, B) includes at least one of a cleaning robot, a security robot, and an entertainment robot.

11. A method of controlling a plurality of robots (A, B) in an environment, comprising: providing a robot manager (320) having a wireless communication module that transmits and receives robot information, the robot manager (320):
accessing and updating a map of the environment within which the plurality of robots (A, B) operate;
receiving information and data used to monitor and control the plurality of robots (A, B);
communicating with each of a plurality of robots within the environment in conjunction with performance of a robot service function;
performing computationally intensive functions on behalf of a robot (A, B) for use in performance of a robot service function and communicating the results of the computationally intensive functions or instructions based thereon to a robot (A, B);
using information provided by a wireless transceiver (400) carried by a user to generate and update a map of the environment; and
automatically updating an electronic map of the environment from location and object information received from one or more of the plurality of robots during performance of one or more service function.

12. The method of claim 11, further comprising scheduling operations of at least one robot from the plurality of robots (A, B) using the robot manager (320).

13. The method of claim 11, further comprising downloading software from a remote system via the Internet and updating the robot manager (320) using the downloaded software, or
further comprising downloading software from a remote system via the Internet and providing enhanced or different functions to one or more of the plurality of robots (A, B) using the downloaded software.

14. The method of claim 11, further comprising multiple robots (A, B) sharing the same information stored at the robot manager, or
further comprising multiple robots (A, B) updating similar information stored at the robot manager.

15. The method of claim 11, further comprising at least two robots from the plurality of robots (A, B) communicating with each other, and/or
wherein the at least two robots (A, B) communicate with each other through the robot manager (320).

## Patentansprüche

1. Verteiltes Multirobotersystem, umfassend:
einen Robotermanager (320) mit einem drahtlosen Kommunikationsmodul (322), das Roboterinformationen überträgt und empfängt; wobei der Robotermanager (320) umfasst:
ein Mapping- bzw. Kartierungs- und Navigationsmodul (330), das konfiguriert ist, eine Karte einer Umgebung zu aktualisieren;
ein Internetkommunikationssubsystem, das konfiguriert ist, Informationen und Daten zu empfangen, die zum Überwachen und Steuern bzw. Regeln einer Mehrzahl von Robotern verwendet werden; und
ein Anwendungsrahmenwerk (334), das konfiguriert ist, Software von einem entfernten System herunterzuladen und den Robotermanager (320) unter Verwendung der heruntergeladenen Software zu aktualisieren; und
eine Mehrzahl von Robotern (A, B) innerhalb der Umgebung, die jeder ein drahtloses Kommunikationsmodul aufweisen, das konfiguriert ist, mit dem Robotermanager (320) in Zusammenhang mit einer Durchführung einer Roboterservicefunktion zu kommunizieren;
wobei der Robotermanager (320) angepasst ist, rechenintensive Funktionen im Auftrag eines Roboters (A, B) zur Verwendung bei der Durchführung einer Roboterservicefunktion durchzuführen und die Ergebnisse der rechenintensiven Funktionen oder Instruktionen basierend darauf an einen Roboter (A, B) zu kommunizieren; und
wobei der Robotermanager (320) angepasst ist, Informationen, die von einem drahtlosen Sender-Empfänger (400) bereitgestellt werden, der von einem Benutzer getragen wird, zu verwenden, um eine Karte der Umgebung zu generieren und zu aktualisieren, und
wobei der Robotermanager (320) angepasst ist, eine elektronische Karte der Umgebung aus Orts- und Objektinformationen, die von einem oder mehreren der Mehrzahl von Robotern empfangen werden, während der Durchführung einer oder mehrerer Servicefunktionen automatisch zu aktualisieren.

2. System nach Anspruch 1, wobei das Kartierungs- und Navigationsmodul (330) die Bewegung der Mehrzahl von Robotern (A, B) innerhalb der Umgebung verfolgt, oder
wobei das Kartierungs- und Navigationsmodul (330) Informationen und Daten zumindest einem Roboter (A, B) bereitstellt, die von dem Roboter (A, B) verwendet werden, um innerhalb der Umgebung zu navigieren.

3. System nach Anspruch 1, wobei der Robotermanager (320) Informationen, die von zumindest einem der Mehrzahl von Robotern (A, B) bereitgestellt werden, verwendet, um die Karte der Umgebung zu generieren und zu aktualisieren.

4. System nach Anspruch 1, wobei die Karte der Umgebung eine Karte von zumindest einem eines Bürogebäudes, einer Lagerhalle, eines Einkaufzentrums, einer Wohnanlage und eines Hauses enthält.

5. System nach Anspruch 1, wobei der Robotermanager (320) und die Mehrzahl von Robotern (A, B) jeweils ein Bluetooth-Kommunikationssubsystem enthalten oder
wobei das Internetkommunikationssubsystem konfiguriert ist, den Robotermanager (320) zu befähigen, mit entfernten Systemen zu kommunizieren.

6. System nach Anspruch 1, wobei das Anwendungsrahmenwerk (334) auch konfiguriert ist, verbesserte oder unterschiedliche Funktionen einem oder mehreren der Mehrzahl von Robotern (A, B) unter Verwendung der heruntergeladenen Software bereitzustellen.

7. System nach Anspruch 1, wobei mehrere Roboter (A, B) konfiguriert sind, dieselben Informationen zu teilen, die an dem Robotermanager (320) gespeichert sind, oder
wobei mehrere Roboter (A, B) konfiguriert sind, ähnliche Informationen zu aktualisieren, die an dem Robotermanager (320) gespeichert sind.

8. System nach Anspruch 1, wobei der Robotermanager (320) ferner einen Scheduler umfasst, der konfiguriert ist, Operationen zumindest eines Roboters der Mehrzahl von Robotern (A, B) festzulegen bzw. zu planen.

9. System nach Anspruch 1, wobei zumindest zwei Roboter der Mehrzahl von Robotern (A, B) konfiguriert sind, miteinander zu kommunizieren, oder
die zumindest zwei Roboter konfiguriert sind, durch den Robotermanager (320) miteinander zu kommunizieren.

10. System nach Anspruch 1, wobei die Mehrzahl von Robotern (A, B) zumindest eines von einem Reinigungsroboter, einem Sicherheitsroboter und einem Unterhaltungsroboter enthalten.

11. Verfahren zum Steuern bzw. Regeln einer Mehrzahl von Robotern (A, B) in einer Umgebung, umfassend: Bereitstellen eines Robotermanagers (320), der ein drahtloses Kommunikationsmodul (322) aufweist, das Roboterinformationen überträgt und empfängt; wobei der Robotermanager (320):
auf eine Karte der Umgebung, innerhalb derer die Mehrzahl von Robotern (A, B) arbeitet, zugreift und diese aktualisiert;
Informationen und Daten empfängt, die zum Überwachen und Steuern bzw. Regeln der Mehrzahl von Robotern (A, B) verwendet werden;
mit jedem einer Mehrzahl von Robotern innerhalb der Umgebung in Zusammenhang mit einer Durchführung einer Roboterservicefunktion kommuniziert;
rechenintensive Funktionen im Auftrag eines Roboters (A, B) zur Verwendung bei der Durchführung einer Roboterservicefunktion durchzuführt und die Ergebnisse der rechenintensiven Funktionen oder Instruktionen basierend darauf an einen Roboter (A, B) kommuniziert;
Informationen, die von einem drahtlosen Sender-Empfänger (400) bereitgestellt werden, der von einem Benutzer getragen wird, verwendet, um eine Karte der Umgebung zu generieren und zu aktualisieren; und
eine elektronische Karte der Umgebung aus Orts- und Objektinformationen, die von einem oder mehreren der Mehrzahl von Robotern empfangen werden, während der Durchführung einer oder mehrerer Servicefunktionen automatisch aktualisiert.

12. Verfahren nach Anspruch 11, ferner umfassend Festlegen bzw. Planen von Operationen zumindest eines Roboters der Mehrzahl von Robotern (A, B) unter Verwendung des Robotermanagers (320).

13. Verfahren nach Anspruch 11, ferner umfassend Herunterladen von Software von einem entfernten System über das Internet und Aktualisieren des Robotermanagers (320) unter Verwendung der heruntergeladenen Software, oder ferner umfassend Herunterladen von Software von einem entfernten System über das Internet und Bereitstellen verbesserter oder unterschiedlicher Funktionen an einen oder mehrere der Mehrzahl von Robotern (A, B) unter Verwendung der heruntergeladenen Software.

14. Verfahren nach Anspruch 11, ferner umfassend, dass mehrere Roboter (A, B) dieselben Informationen teilen, die an dem Robotermanager gespeichert sind,
oder
ferner umfassend, dass mehrere Roboter (A, B) ähnliche Informationen aktualisieren, die an dem Robotermanager gespeichert sind.

15. Verfahren nach Anspruch 11, ferner umfassend, dass zumindest zwei Roboter aus der Mehrzahl von Robotern (A, B) miteinander kommunizieren, und/oder
wobei die zumindest zwei Roboter (A, B) durch den Robotermanager (320) miteinander kommunizieren.

## Revendications

1. Système à robots multiples distribué comprenant :
un gestionnaire de robots (320) ayant un module de communication sans fil (322) qui transmet et reçoit des informations de robot ; le gestionnaire de robots (320) comprenant :
un module de cartographie et de navigation (330) configuré pour générer et mettre à jour une carte d'un environnement ;
un sous-système de communication Internet configuré pour recevoir des informations et données utilisées pour surveiller et commander une pluralité de robots ; et
un cadre d'applications (334) configuré pour télécharger un logiciel d'un système à distance et pour mettre à jour le gestionnaire de robots (320) en utilisant le logiciel téléchargé ; et
une pluralité de robots (A, B) au sein de l'environnement, chacun ayant un module de communication sans fil configuré pour communiquer avec le gestionnaire de robots (320) en conjonction avec la réalisation d'une fonction de service de robot ;
dans lequel le gestionnaire de robots (320) est adapté à réaliser des fonctions intensives du point de vue informatique au nom d'un robot (A, B) pour l'utilisation dans la réalisation d'une fonction de service de robot et communiquer les résultats des fonctions intensives du point de vue informatique ou des instructions basées sur elles à un robot (A, B) ; et
dans lequel le gestionnaire de robots (320) est adapté à utiliser des informations fournies par un émetteur-récepteur sans fil (400) porté par un utilisateur pour générer et mettre à jour une carte de l'environnement, et
dans lequel le gestionnaire de robots (320) est adapté à automatiquement mettre à jour une carte électronique de l'environnement à partir d'informations d'emplacement et d'objet reçues d'un ou plusieurs de la pluralité de robots au cours de la réalisation d'une ou plusieurs fonction de service.

2. Système selon la revendication 1, dans lequel le module de cartographie et de navigation (330) suit le mouvement de la pluralité de robots (A, B) au sein de l'environnement, ou
dans lequel le module de cartographie et de navigation (330) fournit des informations et données à au moins un robot (A, B) qui sont utilisées par le robot (A, B) pour naviguer au sein de l'environnement.

3. Système selon la revendication 1, dans lequel le gestionnaire de robots (320) utilise des informations fournies par au moins un de la pluralité de robots (A, B) pour générer et mettre à jour la carte de l'environnement.

4. Système selon la revendication 1, dans lequel la carte de l'environnement inclut une carte d'au moins un élément parmi un immeuble de bureaux, un entrepôt, un centre commercial, un complexe résidentiel et une maison.

5. Système selon la revendication 1, dans lequel le gestionnaire de robots (320) et la pluralité de robots (A, B) incluent chacun un sous-système de communication Bluetooth, ou
dans lequel le sous-système de communication Internet est configuré pour permettre au gestionnaire de robots (320) de communiquer avec des systèmes à distance.

6. Système selon la revendication 1, dans lequel le cadre d'applications (334) est également configuré pour fournir des fonctions amplifiées ou différentes à un ou plusieurs de la pluralité de robots (A, B) en utilisant le logiciel téléchargé.

7. Système selon la revendication 1, dans lequel de multiples robots (A, B) sont configurés pour partager la même information stockée au niveau du gestionnaire de robots (320), ou
dans lequel de multiples robots (A, B) sont configurés pour mettre à jour des informations similaires stockées au niveau du gestionnaire de robots (320).

8. Système selon la revendication 1, dans lequel le gestionnaire de robots (320) comprend en outre un programmateur configuré pour programmer des opérations d'au moins un robot parmi la pluralité de robots (A, B).

9. Système selon la revendication 1, dans lequel au moins deux robots parmi la pluralité de robots (A, B) sont configurés pour communiquer l'un avec l'autre, ou
les au moins deux robots sont configurés pour communiquer l'un avec l'autre à travers le gestionnaire de robots (320).

10. Système selon la revendication 1, dans lequel la pluralité de robots (A, B) inclut au moins un robot parmi un robot de nettoyage, un robot de sécurité et un robot de divertissement.

11. Procédé de commande d'une pluralité de robots (A, B) dans un environnement, comprenant : fournir un gestionnaire de robots (320) ayant un module de communication sans fil qui transmet et reçoit des informations de robot, le gestionnaire de robots (320) :
accédant et mettant à jour une carte de l'environnement au sein duquel la pluralité de robots (A, B) opèrent ;
recevant des informations et données utilisées pour surveiller et commander la pluralité de robots ;
communiquant avec chacun d'une pluralité de robots au sein de l'environnement en conjonction avec la réalisation d'une fonction de service de robot ;
réalisant des fonctions intensives du point de vue informatique au nom d'un robot (A, B) pour l'utilisation dans la réalisation d'une fonction de service de robot et communiquant les résultats des fonctions intensives du point de vue informatique ou des instructions basées sur elles à un robot (A, B) ;
utilisant des informations fournies par un émetteur-récepteur sans fil (400) porté par un utilisateur pour générer et mettre à jour une carte de l'environnement ; et
mettant à jour automatiquement une carte électronique de l'environnement à partir d'informations d'emplacement et d'objet reçues d'un ou plusieurs de la pluralité de robots au cours de la réalisation d'une ou plusieurs fonction de service.

12. Procédé selon la revendication 11, comprenant en outre programmer des opérations d'au moins un robot parmi la pluralité de robots (A, B) en utilisant le gestionnaire de robots (320).

13. Procédé selon la revendication 11, comprenant en outre télécharger un logiciel d'un système à distance par le biais d'Internet et mettre à jour le gestionnaire de robots (320) en utilisant le logiciel téléchargé, ou
comprenant en outre télécharger un logiciel d'un système à distance par le biais d'Internet et fournir des fonctions amplifiées ou différentes à un ou plusieurs de la pluralité de robots (A, B) en utilisant le logiciel téléchargé.

14. Procédé selon la revendication 11, comprenant en outre de multiples robots (A, B) partageant la même information stockée au niveau du gestionnaire de robots, ou
comprenant en outre de multiples robots (A, B) mettant à jour des informations similaires stockées au niveau du gestionnaire de robots.

15. Procédé selon la revendication 11, comprenant en outre au moins deux robots parmi la pluralité de robots (A, B) communiquant l'un avec l'autre, et/ou dans lequel les au moins deux robots (A, B) communiquent l'un avec l'autre à travers le gestionnaire de robots (320).
